# EUROPÄISCHE PATENTSCHRIFT

(11) **EP 1 533 151 B1**
(45) Veröffentlichungstag und Bekanntmachung des Hinweises auf die Patenterteilung: **13.09.2006**
(21) Anmeldenummer: 03104310.2
(22) Anmeldetag: 21.11.2003
(51) Int. Cl.: B60G 21/055, B60G 7/02, B62D 21/11

(54) **Einzelradaufhängung für ein Kraftfahrzeug**
Motor vehicle independent wheel suspension
Suspension à roue indépendante pour véhicule automobile

(43) Veröffentlichungstag der Anmeldung: 25.05.2005
(73) Patentinhaber: Ford Global Technologies, LLC, A subsidary of Ford Motor Company, Dearborn, MI 48126 (US)
(72) Erfinder: Schulz, Markus, 42855 Remscheid (DE)
(74) Vertreter: Drömer, Hans-Carsten

(56) Entgegenhaltungen:
- EP-A- 0 477 654
- EP-A- 1 362 767
- WO-A-01/40008
- DE-A- 19 920 051
- FR-A- 2 788 822
- FR-A- 2 810 275
- US-A- 5 707 074
- US-A- 6 085 856
- PATENT ABSTRACTS OF JAPAN vol. 2000, no. 23, 10. Februar 2001 (2001-02-10) -& JP 2001 171326 A (NISSAN MOTOR CO LTD), 26. Juni 2001 (2001-06-26)
- PATENT ABSTRACTS OF JAPAN vol. 2000, no. 06, 22. September 2000 (2000-09-22) -& JP 2000 071734 A (MAZDA MOTOR CORP), 7. März 2000 (2000-03-07)
- PATENT ABSTRACTS OF JAPAN vol. 013, no. 274 (M-841), 23. Juni 1989 (1989-06-23) -& JP 01 070276 A (MAZDA MOTOR CORP), 15. März 1989 (1989-03-15)
- PATENT ABSTRACTS OF JAPAN vol. 1998, no. 14, 31. Dezember 1998 (1998-12-31) -& JP 10 258763 A (NISSAN MOTOR CO LTD), 29. September 1998 (1998-09-29)
- PATENT ABSTRACTS OF JAPAN vol. 2000, no. 03, 30. März 2000 (2000-03-30) & JP 11 334332 A (DAIHATSU MOTOR CO LTD), 7. Dezember 1999 (1999-12-07)
- PATENT ABSTRACTS OF JAPAN vol. 2003, no. 11, 5. November 2003 (2003-11-05) -& JP 2003 205852 A (NISSAN MOTOR CO LTD), 22. Juli 2003 (2003-07-22)

## Beschreibung

Die Erfindung betrifft eine Radaufhängung an Kraftfahrzeugen mit einem Hilfsrahmen und einem Stabilisator, wobei ein unterer Querlenker zumindest in einer Dämpfungseinheit aufgenommen ist, die in einer mit dem Hilfsrahmen verbindbaren Aufnahme gelagert ist, wobei der Stabilisator in Querrichtung des Hilfsrahmens gesehen in äußeren Endbereichen des Hilfsrahmens mit diesem verbunden ist.

Derartige Radaufhängungen sind beispielsweise als McPherson-Radaufhängungen bekannt. Hierbei ist der Stabilisator jeweils mittels einer Klemme und zwei Bolzenschrauben beidseitig einer Fahrzeuglängsachse an dem Hilfsrahmen befestigt.

Als ein Hauptnachteil der bekannten Radaufhängungen ist anzusehen, daß die Befestigung des Stabilisators an dem Hilfsrahmen in Querrichtung des Kraftfahrzeugs gesehen weit innerhalb, also näher an einer Fahrzeuglängsachse als die Dämpfungseinheit angeordnet ist. Bei bekannten Anordnungen weist ein Hebelarm des Stabilisators einen Längenbetrag von 281 mm auf. Dadurch ergibt sich ein schlechtes Ansprechverhalten, da der Hebelarm des Stabilisators relativ lang ist. Hierdurch werden hohe Belastungen auf den Hilfsrahmen ausgeübt, die eine Verstärkung erfordern um den Belastungen standzuhalten. Weiterhin erhöht das Biegemoment die Biegespannung im Stabilisatorrücken und den Radien, welche negative Einflüsse auf die Dauerhaltbarkeit des Stabilisators hat.

Die JP 2001-171326 offenbart eine Radaufhängung an Kraftfahrzeugen mit einem Hilfsrahmen und einem Stabilisator. Der Stabilisator ist in Querrichtung des Hilfsrahmens gesehen in äußeren Endbereichen des Hilfsrahmens mit diesem verbunden.

In der JP 2000-071734 ist ebenfalls eine Radaufhängung offenbart. Die Radaufhängung ist derart gestaltet, dass ein Ende eines Querlenkers mit einem Hilfsrahmen verbunden ist. Ein zerbrechlicher Abschnitt einer Buchse ist schwächer ausgestaltet als die übrigen Abschnitte der Buchse, die in dem Querlenker angeordnet ist. Der zerbrechliche Abschnitt in einem Trägerelement des Hilfsrahmens angeordnet.

In der JP 01070276 ist eine Radaufhängung offenbart, bei der eine Stabilisator innerhalb eines Hilfsrahmens angeordnet ist, wobei der Stabilisator in Querrichtung des Hilfsrahmens gesehen beidseitig aus dem Hilfsrahmen herausgeführt ist.

Die JP 10258763 offenbart ebenfalls eine Radaufhängung. Der Radaufhängung ist ein Befestigungsmittel zugeordnet, dass ein Element zur Befestigung der Aufhängung und ein Element zur Befestigung an einem Fahrzeugkörper aufweist. Das Befestigungsmittel weist zudem eine Schelle zur Befestigung eines Stabilisators auf, der in einer Nut aufgenommen ist, wobei die Schelle als Verstärkungselement ausgestaltet ist.

Die WO 01/40008 zeigt eine Radaufhängung mit einem Hilfsrahmen und einem Stabilisator. Der Stabilisator ist in Querrichtung des Hilfsrahmens gesehen in äußeren Endbereichen des Hilfsrahmens mit diesem verbunden.

Der Erfindung liegt die Aufgabe zugrunde, eine verbesserte Radaufhängung der Eingangs genannten Art zur Verfügung zustellen, welche mit einfachen Mitteln eine dynamische Leistungsentwicklung positiv beeinflußt und zugleich preiswerter herzustellen ist.

Erfindungsgemäß wird die Aufgabe durch eine Radaufhängung mit den Merkmalen des Anspruchs 1 gelöst.

Der Erfindung liegt die Erkenntnis zugrunde, daß die Leistungsfähigkeit des Stabilisators von der Übersetzung zu einem Rad abhängt. Je größer die Übersetzung wird, erfolgt eine umso geringere Wankneigung eines Fahrzeugaufbaus. Mit der Erfindung wird vorteilhaft erreicht, daß ein Befestigungspunkt des Stabilisators möglichst weit außerhalb, also weit entfernt von der Fahrzeuglängsachse angeordnet ist, wodurch eine größere Übersetzung erreicht wird. Ein kleiner Hebelarm gewährleistet ein gutes Ansprechverhalten des Stabilisators.

Um eine einfache Befestigung sicherzustellen, ist es zweckmäßig, wenn der Stabilisator über einen für die Verbindung der Aufnahme mit dem Hilfsrahmen vorgesehenen Befestigungsbereich mit dem Hilfsrahmen verbunden ist. Der Befestigungsbereich weist die notwendigen Öffnungen auf, durch die eine kraftformschlüssige Verbindung des Stabilisators mit dem Hilfsrahmen herstellbar ist. Dies ist beispielsweise bei horizontal angeordneten unteren Querlenkern denkbar, bei dem der Stabilisator direkt mit dem Hilfsrahmen verbindbar ist, indem die gleichen Öffnungen genutzt werden, die für die Montage der Aufnahme vorgesehen sind.

Günstig im Sinne der Erfindung ist, wenn der Stabilisator über die Aufnahme mit dem Hilfsrahmen verbunden ist. Hierbei ist die Aufnahme in dem dafür vorgesehenen Befestigungsbereich mit dem Hilfsrahmen verbunden. Der Stabilisator ist gleichzeitig mit denselben Verbindungsmitteln wie die Aufnahme mit dem Hilfsrahmen verbunden. Die ist beispielsweise bei Dämpfungseinheiten, die als konventionelle Gummibuchse oder Hydrobuchse ausgestaltet und vorzugsweise horizontal angeordnet sind denkbar.

Um den Stabilisator mit der Aufnahme der Dämpfungseinheit oder mit dem Hilfsrahmen zu verbinden, ist es günstig im Sinne der Erfindung, wenn der Stabilisator von einer Klemme zumindest teilweise umfaßt wird. Zweckmäßig ist, wenn die Klemme u-förmig ausgestaltet ist, wobei an freien Enden jeweiliger u-Schenkel jeweils ein Befestigungsflansch angeordnet ist. In dem jeweiligen Befestigungsflansch ist vorteilhaft eine Bohrung zur Durchführung der Verbindungsmittel, vorzugsweise von Bolzenschrauben eingebracht. Vorteilhafter Weise sind die Bohrungen an die Verbindungsmittel zur Verbindung der Aufnahme des Dämpfungsmittels an dem Hilfsrahmen angepaßt.

Der Stabilisator weist einen geringeren Durchmesser als die Klemme auf. Damit der Stabilisator genügend befestigt ist, wird dieser vorteilhaft von einem Führungsmittel umfaßt, daß etwas größer als eine lichte Öffnung der Klemme ist. Damit wird der Stabilisator im angezogenen Zustand der Verbindungsmittel hinreichend gehalten.

Selbstverständlich kann das Führungsmittel auch schwingungsdämpfende Eigenschaften aufweisen.

Mit der erfindungsgemäßen Radaufhängung ist eine bestmögliche Stabilisatorübersetzung erreichbar, da eine Verbindung des Stabilisators mit dem Hilfsrahmen weit entfernt von der Fahrzeuglängsachse angeordnet ist, und zwar vorzugsweise an dem Befestigungsbereich, an dem die Aufnahme des Dämpfungselementes vorgesehen ist. Der Befestigungsbereich ist hierbei ein sogenannter Punkt 4. Punkt 4 ist ein geometrischer Punkt der Fahrwerksauslegung, der einen geometrischen Punkt einer hinteren Dämpfungseinheit eines unteren Querlenkers bei McPherson-Aufhängungen darstellt. Dadurch, daß die Befestigung des Stabilisators sehr weit außerhalb angeordnet ist, erhöht sich die Stabilisatorrate (N/Grad oder N/rad), so daß der Stabilisator mit einem verringerten Durchmesser hergestellt werden kann, wodurch sowohl an Gewicht als auch an Herstellungskosten eingespart werden kann. Damit kann vorteilhaft eine gewünschte Rollrate erzielt werden. Die Rollrate ist ein Winkel eines Fahrzeugaufbaus im Verhältnis zur Seitenkraft, insbesondere einer Zentrifugalkraft, also ein Wert zur Bestimmung der Aufbauneigung. Weiterhin reduziert sich eine Vergleichsspannung, die von Torsions- und Biegemomenten abhängig ist. Dies wirkt sich positiv auf eine Verlängerung der Lebensdauer des Stabilisators aus. Die Vergleichspannung kann beispielsweise nach der Gestaltänderungshypothese in üblicher Weise berechnet werden, um die zu erwartende Lebensdauer abzuschätzen.

Zudem kann auf eine gesonderte Befestigung und somit auf nicht mehr notwendige Bauteile verzichtet werden. Wurde im Stand der Technik der Stabilisator mit jeweils separaten Schrauben und Muttern befestigt, kann bei der erfindungsgemäßen Radaufhängung hierauf vorteilhaft verzichtet werden. Dies erspart zudem eine aufwendige Materiallogistik unterschiedlicher und vielfältiger Bauteile. Selbstverständlich entfällt dabei zusätzlich eine kostenintensive Herstellung von Schraubenlöchern in dem Hilfsrahmen, die zur Aufnahme der Schrauben erforderlich waren.

Weitere Vorteilhafte Ausgestaltungen der Erfindung sind in den Unteransprüchen und der folgenden Figurenbeschreibung offenbart. Es zeigen:
- Fig. 1: eine perspektivische Gesamtansicht einer Radaufhängung,
- Fig. 2: eine Vergrößerung des gekennzeichneten Bereiches aus Figur 1,
- Fig. 3: einen Teilschnitt aus Figur 2,
- Fig. 4: eine Explosionsdarstellung mit einer Ausführungsform einer Aufnahme,
- Fig. 5: eine perspektivische Ansicht aus Figur 4,
- Fig. 6: eine Seitenansicht aus Figur 4,
- Fig. 7: eine perspektivische Seitenansicht aus Figur 4,
- Fig. 8: eine Hinteransicht aus Figur 4,
- Fig. 9: eine Draufsicht aus Figur 4.

In den unterschiedlichen Figuren sind gleiche Teile mit denselben Bezugszeichen versehen, weswegen diese in der Regel auch nur einmal beschrieben werden.

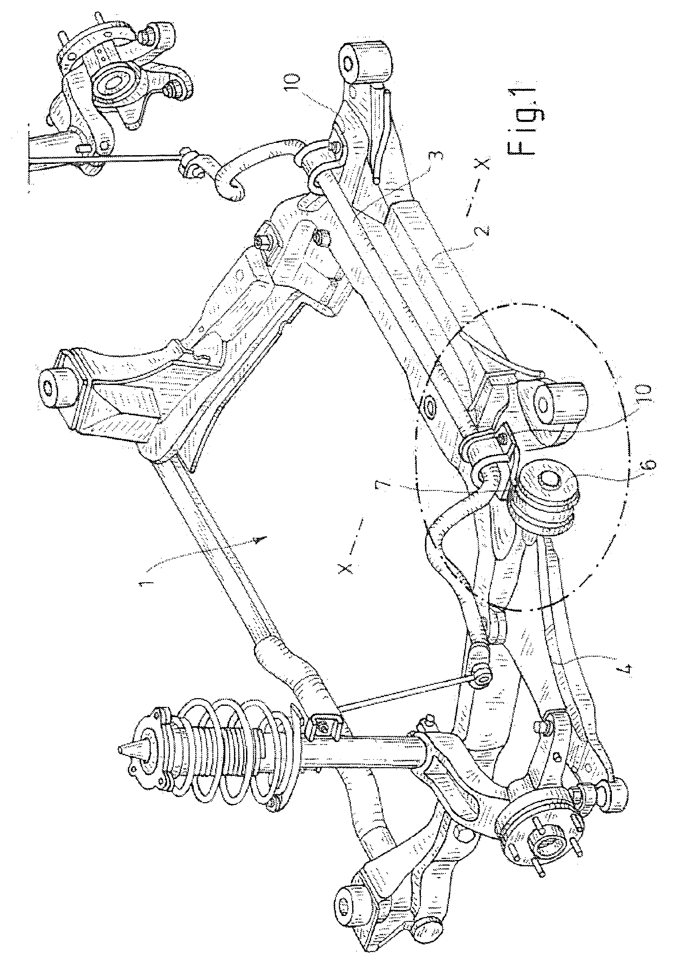

Figur 1 zeigt eine Radaufhängung 1, insbesondere eine McPherson-Radaufhängung mit einem Hilfsrahmen 2 und einem Stabilisator 3. Ein unterer Querlenker 4 ist in üblicher Weise in einer Dämpfungseinheit 6 aufgenommen. Die Dämpfungseinheit 6 ist in einer mit dem Hilfsrahmen 2 verbundenen Aufnahme 7 gelagert. Der Stabilisator 3 ist in Querrichtung des Hilfsrahmens 2 gesehen in äußeren Endbereichen 10 des Hilfsrahmens 2 mit diesem verbunden.

Die Radaufhängung 1 ist symmetrisch zu einer Fahrzeuglängsachse X-X ausgestaltet, so daß nachfolgend lediglich eine Seite der Radaufhängung beschrieben wird.

In dem in den Figuren 1 bis 3 dargestellten Ausführungsbeispiel weist die Dämpfungseinheit 6 einen runden Außenumfang auf. Die Dämpfungseinheit 6 ist beispielhaft als Gummibuchse ausgestaltet und horizontal angeordnet.

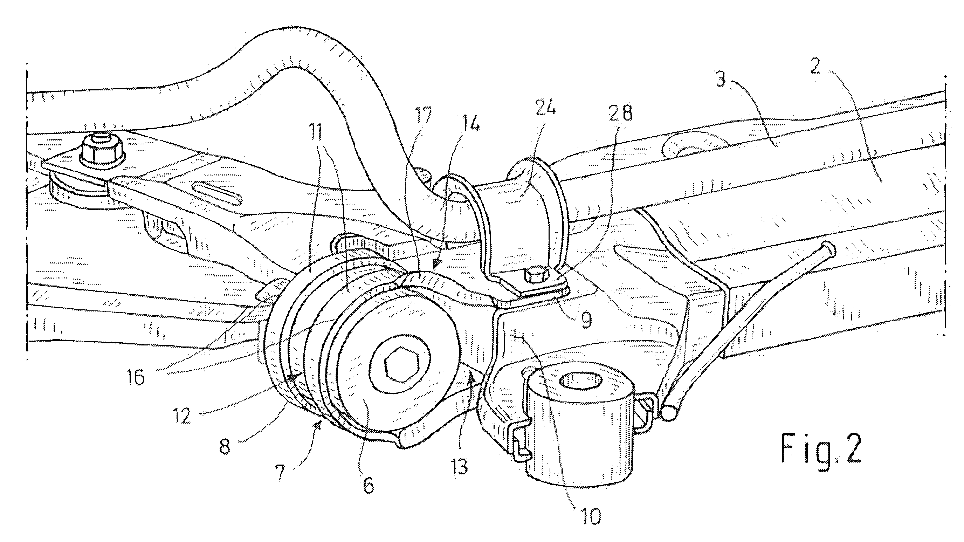

Die Aufnahme 7 ist als Gehäuse einstückig aus einem Blech hergestellt und weist einen in etwa kreisförmigen Aufnahmebereich 8 auf, der in einen Anbindungsbereich 9 übergeht (Figur 2). Der Aufnahmebereich 8 weist zwei in Fahrzeuglängsachse X-X beabstandete Haltestege 11 auf, zwischen denen ein Spalt 12 angeordnet ist. Der Aufnahmebereich 8 umfaßt die Dämpfungseinheit 6 in ihrer Umfangsrichtung in etwa dreiviertel, so daß der Anbindungsbereich 9 als Maul 13 ausgebildet ist. In einem Übergang 14 zum Maul 13 sind die Haltestege 11 jeweils an ihren Außenseiten konusförmig ausgebildet und verbreitern sich in Richtung zum Anbindungsbereich 9. Die Haltestege 11 weisen jeweils einseitig an Außenseiten 16 Aufbiegungen 17 auf, die zur Verstärkung des Übergangs 14 zum Anbindungsbereich 9 dienen.

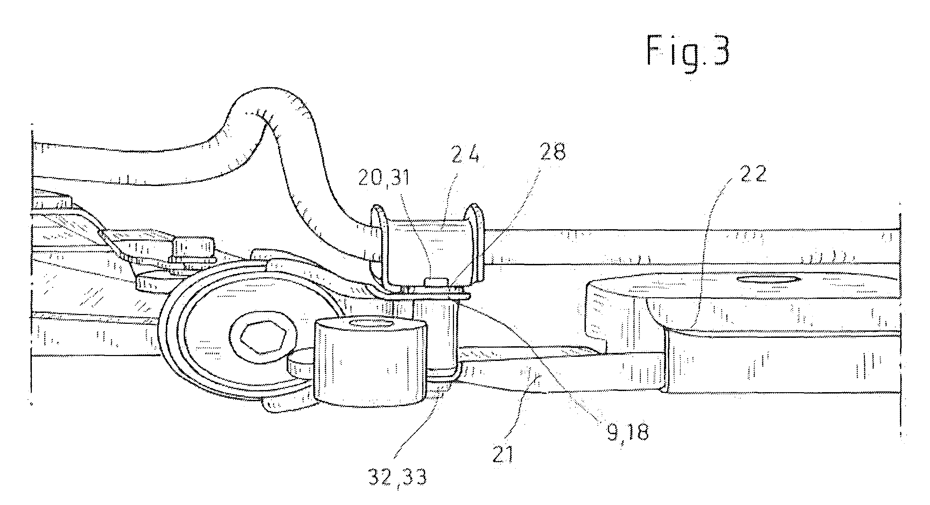

Der Anbindungsbereich 9 weist zwei in einer Hochachse Z-Z beabstandete ebene Befestigungsabschnitte 18 und 19 auf, wobei das Bezugszeichen 18 einen oberen und das Bezugszeichen 19 einen unteren Befestigungsabschnitt bezeichnet (Figur 3). Die Befestigungsabschnitte 18 bzw. 19 sind im wesentlichen rechteckig ausgestaltet und gleich dick. Der Abstand der Befestigungsabschnitte 18 bzw. 19 entspricht im montierten Zustand vorzugsweise einer Bauhöhe des Hilfsrahmens 2. Die Befestigungsabschnitte 18 bzw. 19 sind breiter ausgestaltet als die beiden Haltestege 11 mit dem dazwischen angeordneten Spalt 12. In den Befestigungsabschnitten 18 bzw. 19 sind in Fahrzeuglängsrichtung beabstandete Bohrungen eingebracht. Im montierten Zustand sind die Bohrungen deckungsgleich zu Öffnungen in dem Hilfsrahmen 2 angeordnet, so daß eine Befestigung der Aufnahme 7 an dem Hilfsrahmen 2 vorzugsweise mittels Bolzenschrauben 20 erfolgt. Damit ist ein Befestigungsbereich an dem Hilfsrahmen 2 gebildet, an dem die Aufnahme 7 an dem Hilfsrahmen 2 befestigt ist. Die Aufnahme 7 ist vorzugsweise federähnlich ausgestaltet, so daß der Anbindungsbereich 9 an unterschiedliche Bauhöhen anpaßbar ist.

Der Hilfsrahmen 2 weist eine obere und eine untere Hilfsrahmenschale 21 bzw. 22 auf, so daß zur Verstärkung des Befestigungsbereiches Verstärkungshülsen 23 innerhalb des Hilfsrahmens 2 angeordnet sind (Figur 3). In Figur 3 ist die obere Hilfsrahmenschale 22 im Befestigungsbereich nicht dargestellt, um die Anordnung der Verstärkungshülsen 23 darzustellen.

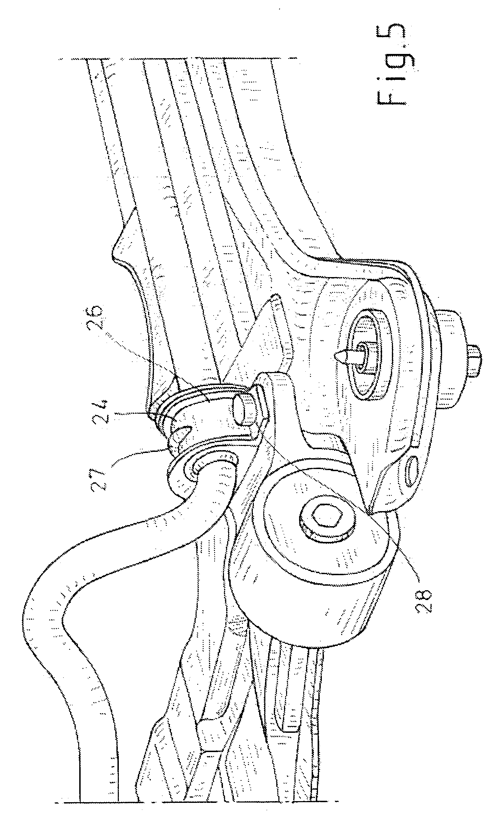

Der Stabilisator 3 ist über eine Klemme 24 an der Aufnahme 7 insbesondere an ihrem oberen Befestigungsabschnitt 18 befestigt (Figuren 2 und 5). Die Klemme 24 ist vorzugsweise u-förmig mit U-Schenkeln 26 und einem verrundeten Basisschenkel 27 ausgestaltet (Figur 5). An freien Enden der U-Schenkel 26 ist jeweils ein Befestigungsflansch 28 angeordnet. In dem Befestigungsflansch 28 ist jeweils eine zur Bohrung in den Befestigungsabschnitten 18 korrespondierende Bohrung eingebracht. Die Klemme 24 ist derart angeordnet, daß diese den Stabilisator 3 umfaßt. Die Befestigungsflanschen 28 sind vorzugsweise plan ausgestaltet und mit ihren Bohrungen kongruent zu den Bohrungen des bzw. der Befestigungsabschnitte 18 sowie der Öffnungen in dem Hilfsrahmen 2.

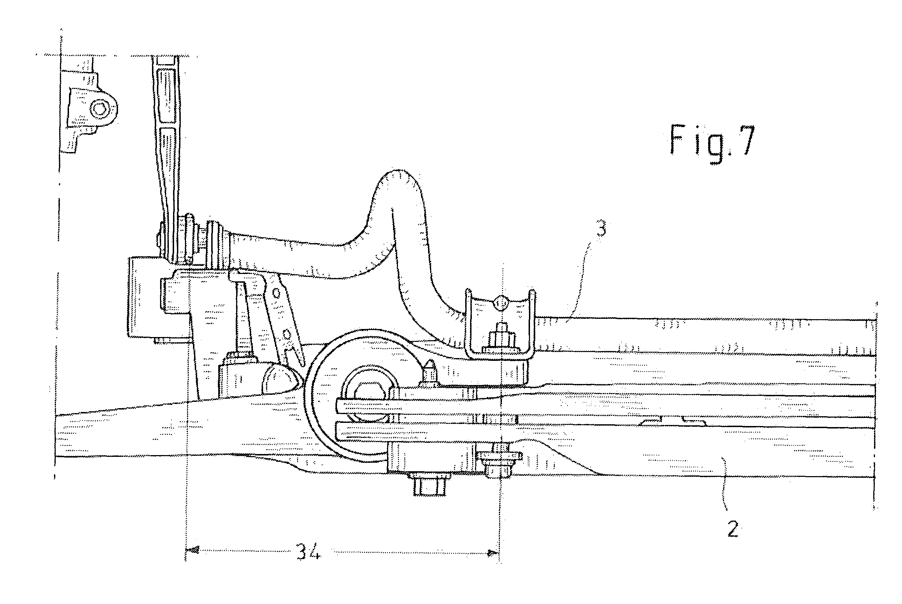

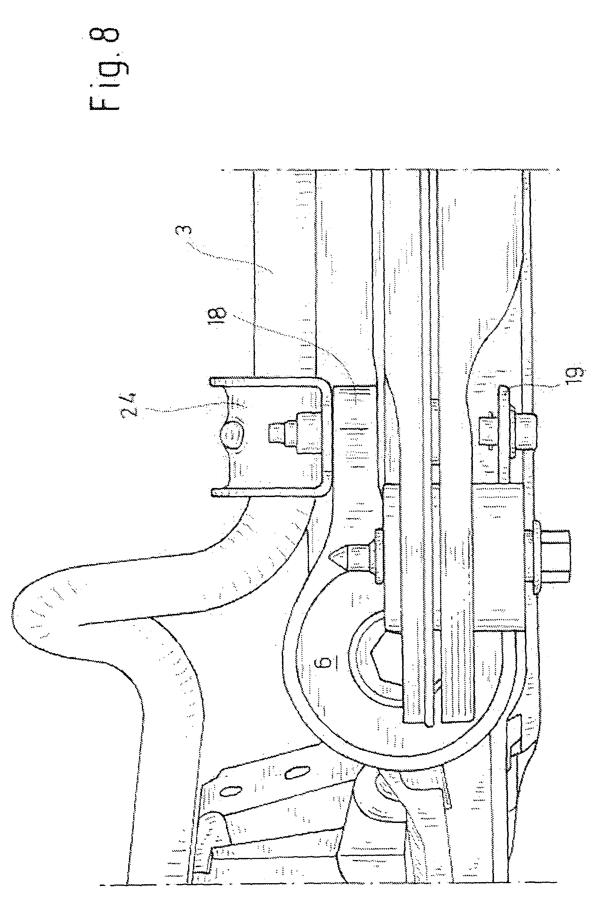

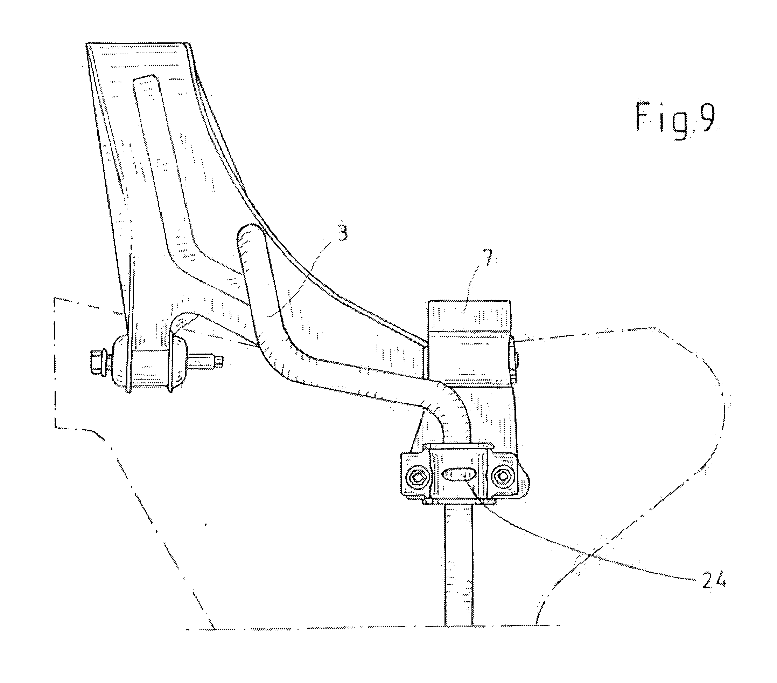

In dem in den Figuren 1 bis 3 sowie 4 bis 9 dargestellten Ausführungsbeispielen liegen die Befestigungsflansche 28 vorzugsweise auf dem oberen Befestigungsabschnitt 18 auf.

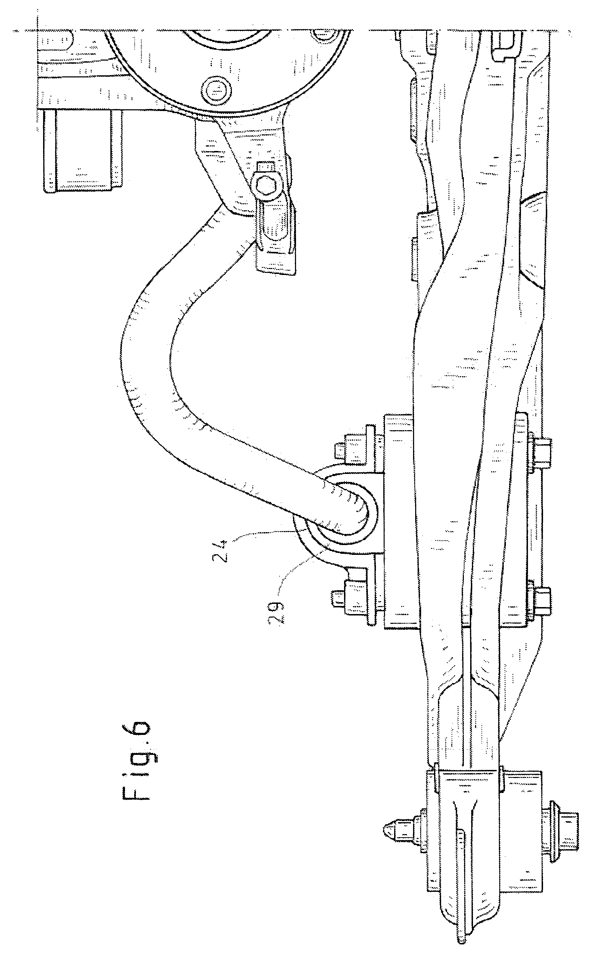

Im Bereich der Klemme 24 ist der Stabilisator 3 zudem von einem Führungsmittel 29 umfaßt (Figuren 5 und 6). Das Führungsmittel 29 bewirkt im montierten Zustand einen notwendigen Halt des Stabilisators 3 und kann zudem auch als Entkopplungsmittel wirken. Das Führungsmittel 29 ist flexibel ausgestaltet, so daß es zum einen an einer Innenwand der Klemme 24 vollständig und an dem ebenen Befestigungsabschnitt 12 plan aufliegt.

Die Bolzenschrauben 20 werden aus der Richtung von der Klemme 24 kommend in Richtung eines Bodens durch die deckungsgleichen Bohrungen bzw. Öffnungen gesteckt, wobei die Verstärkungshülsen 23 gleichzeitig als Führung der Bolzenschrauben 20 dienen. Die Bolzenschrauben 20 liegen mit ihrem Kopf 31 jeweils auf dem Befestigungsflansch 28 auf ragen mit ihrem freien Gewindeende 32 über den unteren Befestigungsabschnitt 19 in Richtung zum Boden. Eine Mutter 33 wird zur kraftformschlüssigen Verbindung und sicheren Befestigung jeweils auf das Gewindeende 32 aufgeschraubt. Selbstverständlich kann auch eine dazu entgegengesetzte Montagerichtung der Bolzenschrauben 20 vorgesehen sein.

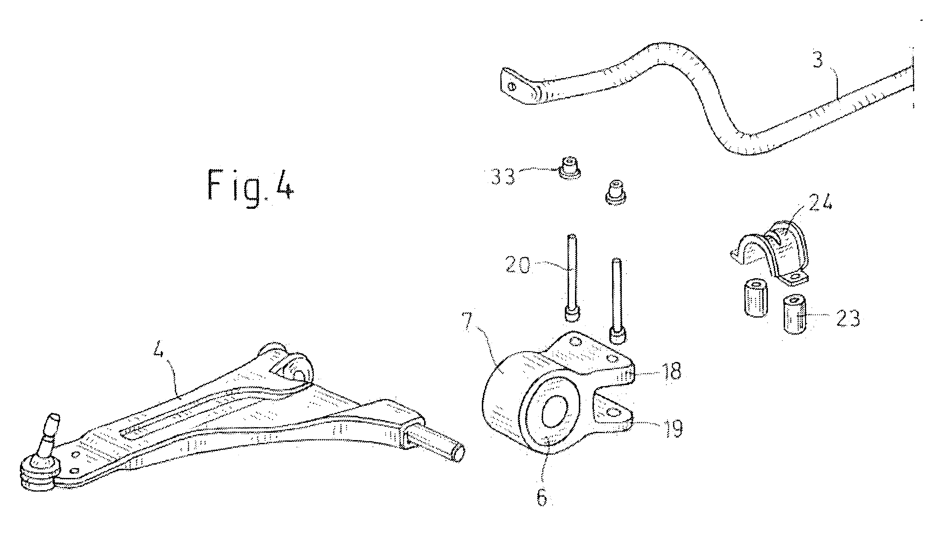

In den Figuren 4 bis 9 ist die Dämpfungseinheit 6 im Unterschied zu Figuren 1 bis 3 als Hydrodämpfer ausgelegt. Die Aufnahme 7 weist einen kreisförmigen Aufnahmebereich 8 auf, und umfaßt die Dämpfungseinheit 6 vollumfänglich. Der Anbindungsbereich 9 ist mit seinem oberen Befestigungsabschnitt 18 dicker ausgebildet als der untere Befestigungsabschnitt 19. Dementsprechend ist der jeweilige Übergang 14 gestaltet. Die Dämpfungseinheit 6 nach dem Ausführungsbeispiel der Figuren 4 bis 9 besteht aus Aluminium und ist vorzugsweise als einstückiges Aluminium Strangpressteil ausgestaltet.

Bei den dargestellten Ausführungsbeispielen beträgt eine Länge eines Hebelarms 34 des Stabilisators 3 vorteilhafter Weise lediglich 190 mm. Damit ist der Hebelarm 34 relativ kurz.

## Patentansprüche

1. Radaufhängung an Kraftfahrzeugen mit einem Hilfsrahmen (2) und einem Stabilisator (3), wobei ein unterer Querlenker (4) zumindest in einer Dämpfungseinheit (6) aufgenommen ist, die in einer mit dem Hilfsrahmen (2) verbindbaren Aufnahme (7) gelagert ist, wobei der Stabilisator (3) in Querrichtung des Hilfsrahmens (2) gesehen in äußeren Endbereichen (10) des Hilfsrahmens (2) mit diesem verbunden ist,
**dadurch gekennzeichnet, daß**
der Stabilisator (3) mit einem für die Verbindung der Aufnahme (7) mit dem Hilfsrahmen (2) vorgesehenen Befestigungsbereich mit dem Hilfsrahmen (2) verbunden ist, wobei der Stabilisator (3) über Öffnungen, die für die Montage der Aufnahme (7) vorgesehen sind direkt mit dem Hilfsrahmen (2) verbindbar ist, so dass der Stabilisator (3) mit denselben Verbindungsmitteln wie die Aufnahme (7) mit dem Hilfsrahmen (2) verbindbar ist.

2. Radaufhängung nach Anspruch 1,
**dadurch gekennzeichnet, daß**
der Stabilisator (3) kraftformschlüssig über die Aufnahme (7) mit dem Hilfsrahmen (2) verbunden ist.

3. Radaufhängung nach Anspruch 1 oder 2,
**dadurch gekennzeichnet, daß**
der Stabilisator (3) zumindest teilweise von einer Klemme (24) umfaßt wird, die u-förmig mit U-Schenkeln (26) und einem verrundeten Basissteg (27) ausgestaltet ist.

4. Radaufhängung nach Anspruch 3,
**dadurch gekennzeichnet, daß**
die Klemme (24) an freien Enden ihrer U-Schenkel (26) Befestigungsflansche (28) aufweist, in denen Bohrungen eingebracht sind.

5. Radaufhängung nach einem der vorhergehenden Ansprüche,
**dadurch gekennzeichnet, daß**
der Stabilisator (3) in einem Klemmenbereich von einem Führungsmittel (29) umgeben ist.

## Claims

1. Wheel suspension on motor vehicles having a subframe (2) and a stabilizer (3), a lower transverse link (4) being held at least in one damping unit (6) which is mounted in a receptacle (7) which can be connected to the subframe (2), the stabilizer (3) being connected to the subframe (2) in outer end regions (10) of said subframe (2) as viewed in the transverse direction of the subframe (2),
**characterized in that**
the stabilizer (3) is connected to the subframe (2) by means of a fastening region provided for connecting the receptacle (7) to the subframe (2), it being possible for the stabilizer (3) to be directly connected to the subframe (2) via openings which are provided for mounting the receptacle (7), so that the stabilizer (3) can be connected to the subframe (2) with the same connecting means as the receptacle (7).

2. Wheel suspension according to Claim 1,
**characterized in that**
the stabilizer (3) is connected to the subframe (2) in a force-fitting and form-fitting manner via the receptacle (7).

3. Wheel suspension according to Claim 1 or 2,
**characterized in that**
the stabilizer (3) is at least partially enclosed by a clamp (24) which is U-shaped with U-limbs (26) and a rounded base web (27).

4. Wheel suspension according to Claim 3,
**characterized in that**
the clamp (24) has fastening flanges (28), in which bores are formed, at free ends of its U-limbs (26).

5. Wheel suspension according to one of the preceding claims,
**characterized in that**,
in a clamping region, the stabilizer (3) is enclosed by a guide means (29).

## Revendications

1. Suspension de roue pour véhicules automobiles, comprenant un cadre auxiliaire (2) et un stabilisateur (3), un bras latéral inférieur (4) étant reçu au moins dans une unité d'amortissement (6) qui est montée dans un logement (7) pouvant être connecté au cadre auxiliaire (2), le stabilisateur (3), vu dans la direction transversale du cadre auxiliaire (2), étant connecté au cadre auxiliaire (2) dans des régions d'extrémité extérieures (10) de celui-ci,
**caractérisée en ce que**
le stabilisateur (3) est connecté au cadre auxiliaire (2) par une région de fixation prévue pour la connexion du logement (7) au cadre auxiliaire (2), le stabilisateur (3) pouvant être connecté directement au cadre auxiliaire (2) par le biais d'ouvertures qui sont prévues pour le montage du logement (7), de sorte que le stabilisateur (3) puisse être connecté au cadre auxiliaire (2) avec les mêmes moyens de connexion que le logement (7).

2. Suspension de roue selon la revendication 1,
**caractérisée en ce que**
le stabilisateur (3) est connecté au cadre auxiliaire (2) par engagement positif par force par le biais du logement (7).

3. Suspension de roue selon la revendication 1 ou 2,
**caractérisée en ce que**
le stabilisateur (3) est entouré au moins en partie par une pince (24) qui est réalisée en forme de U avec des branches en U (26) et une section de base arrondie (27).

4. Suspension de roue selon la revendication 3,
**caractérisée en ce que**
la pince (24) présente aux extrémités libres de ses branches en U (26) des brides de fixation (28) dans lesquelles sont pratiqués des alésages.

5. Suspension de roue selon l'une quelconque des revendications précédentes,
**caractérisée en ce que**
le stabilisateur (3) est entouré par un moyen de guidage (29) dans une région de serrage.
